# EUROPEAN PATENT APPLICATION

(11) **EP 1 717 085 A1**
(43) Date of publication of application: **02.11.2006**
(21) Application number: 06008817.6
(22) Date of filing: 27.04.2006
(51) Int. Cl.: B60K 6/04, H02K 7/00

(54) **Motor sub-assembly unit for a vehicle, straddle-type vehicle and method of assembling the straddle-type vehicle**

(30) Priority: 27.04.2005 JP 2005129797
(71) Applicant: YAMAHA HATSUDOKI KABUSHIKI KAISHA, Iwata-shi, Shizuoka-ken 438-8501 (JP)
(72) Inventor: Masuda, Tatsuyuki, Iwata-shi Shizuoka-ken 438-8501 (JP); Nagai, Sueji, Iwata-shi Shizuoka-ken 438-8501 (JP); Watanabe, Takeshi, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to a sub-assembly of a unit (90;130) adapted to perform energy conversion between electrical energy and mechanical energy for propelling a straddle-type vehicle, comprising a stator (70;110) and a unit cover (60;100), which covers the stator (70;110) and to which the stator is fixed, wherein the unit cover is configured to cover an outside region of the stator opposite a stator body-side facing a body of the straddle-type vehicle. The sub-assembly may be a motor (90) or a generator (130).

## Description

The present invention relates to a motor sub-assembly unit for a vehicle having some of a plurality of parts, to be mounted on a straddle-type vehicle, assembled in such a manner as to be mounted on the straddle-type vehicle, a straddle-type vehicle provided with an electric motor and a method of assembling the straddle-type vehicle.

Hitherto, a hybrid straddle-type vehicle provided with a motor in addition to an engine, has been known as a device for generating power to propel the straddle-type vehicle (for example, see JP-A-2000-013913 and JP-A-Hei 8-175474). In parallel hybrid straddle-type vehicles, torque (mechanical energy) generated by the engine and motor is transmitted to a rear wheel axle to form propulsion force of the straddle-type vehicle.

in series hybrid straddle-type vehicles, a generator is provided for converting torque generated by the engine into electric power (electrical energy). The motor converts the electric power generated into torque. As such, the torque generated is transmitted to the rear wheel axle to form propulsion force of the straddle-type vehicle. That is, in the series hybrid straddle-type vehicles, the engine constitutes a device for indirectly generating propulsion force of the straddle-type vehicle.

The electric motor or the motor, and the generator are each provided with a rotor and a stator. The motor for generating propulsion force of the straddle-type vehicle, or the stator provided in the generator for generating electric power to rotate such a motor, has a large weight in particular. Therefore, a worker engaged in mounting stators on the bodies of straddle-type vehicles should support the stator of a large weight.

In addition, the rotor and stator provided on the foregoing motor or generator are attracted to each other by large magnetic force. Therefore, when a stator is mounted on the body of a straddle-type vehicle with a rotor, the worker is required to support the stator with force capable of responding to the attractive force between the rotor and stator.

However since the worker engaged in mounting stators on the bodies of straddle-type vehicles generally has held the stator directly, the stator is difficult to hold, raising a problem of the degree of difficulty in mounting work of stators on straddle-type vehicles being high.

In view of the foregoing, the object of the present invention is to provide an electric motor sub-assembly unit for a vehicle, a straddle-type vehicle with an electric motor sub-assembly unit for a vehicle and a method of assembling the straddle-type vehicle, capable of effecting easy support of a stator included in the electric motor so that the electric motor can be mounted on the straddle-type vehicle more easily.

This objective is solved in an inventive manner by a sub-assembly of a unit adapted to perform energy conversion between electrical energy and mechanical energy for propelling a straddle-type vehicle, comprising a stator and a unit cover, which covers the stator and to which the stator is fixed, wherein the unit cover is configured to cover an outside region of the stator opposite a stator body-side facing a body of the straddle-type vehicle.

Preferably, the unit cover covers a circumferential side surface of the stator when the stator is in the condition of being fixed to the unit cover.

Further, preferably the unit cover is provided with a support aid tool fixing-section by means of which a support aid tool is fixable to the unit cover, the support aid tool aiding in supporting the sub-assembly when the sub-assembly unit is mounted on the body of the straddle-type vehicle.

Still further, preferably the unit is an electric motor for converting electrical energy into mechanical energy to drive a rear wheel of the vehicle (claim 4). Therein, the sub-assembly might further comprise a rotor of the electric motor to be fixed to the electric motor cover (claim 5).

Alternatively, the unit is a generator for converting mechanical energy generated by an engine into electrical energy, and a rotor of the generator is rotated by a rotation of a crankshaft of the engine extending in a lateral direction of the vehicle (claim 6).

The above objective is further solved in an inventive manner by a straddle-type vehicle comprising an electric motor having a sub-assembly unit according to claim 4 or 5, a rear wheel axle extending in the lateral direction of the vehicle, a motor rotational shaft disposed approximately parallel to the rear wheel axle and operatively coupled with the rear wheel axle, and a motor case for housing at least part of the motor rotational shaft, to cover a motor body side region of the motor facing the body of the straddle-type vehicle, wherein the electric motor sub-assembly according to claim 4 or 5 for a vehicle is fixed to the motor case on the same axis as that of the motor rotational shaft.

The above objective is still further solved in an inventive manner by a straddle-type vehicle comprising an electric motor having a sub-assembly unit according to claim 6, and a generator case for covering a region of the rotor facing the body of the straddle-type vehicle, the region being a rotor body side region including part of a circumferential side surface of the rotor, wherein the rotor has a shape to cover at least part of the circumferential side surface of the stator. Therein, according to a preferred embodiment, the straddle-type vehicle further comprises a generator rotational shaft fixed to the crankshaft and disposed approximately on the same axis as that of the crankshaft, wherein the generator case houses at least part of the generator rotational shaft, and the sub-assembly unit according to claim 6 is fixed to the generator case on the same axis as that of the generator rotational shaft.

According to a further preferred embodiment, the straddle-type vehicle comprises an electric motor sub-assembly unit according to claim 4 or 5, and an electric motor sub-assembly unit according to claim 6.

For the method aspect, the above objective is solved in an inventive manner by a straddle-type vehicle assembling method for a straddle-type vehicle having a generator for converting electrical energy into mechanical energy to propel the straddle-type vehicle, comprising the steps of: mounting a rotor of the generator on a body of the straddle-type vehicle, forming a generator sub-assembly unit that is assembled in such a manner as to be mounted on the straddle-type vehicle, with the stator fixed to a generator cover configured to cover an outside region of a stator of the generator opposite the stator body-side region thereof facing the body of the straddle-type vehicle, fixing to the generator cover, a support aid tool for aiding in supporting the generator sub-assembly unit, and holding the support aid tool, to fix the generator sub-assembly unit to the body of the straddle-type vehicle to which a rotor of the generator is fixed.

Likewise, the objective is solved in an inventive manner by a straddle-type vehicle assembling method for a straddle-type vehicle having an electric motor for converting electrical energy into mechanical energy to propel the straddle-type vehicle, comprising the steps of: forming an electric motor sub-assembly unit for a vehicle assembled in such a manner as to be mounted on the straddle vehicle, with the stator and a rotor of the motor fixed to a motor cover for covering an outside region of a stator of the motor opposite a stator body-side region thereof facing the body of the straddle-type vehicle, fixing to the motor cover, a support aid tool for aiding in supporting the electric motor sub-assembly unit, and holding the support aid tool, to fix the electric motor sub-assembly unit for a vehicle to the body of the straddle-type vehicle.

In the following, the present invention is explained in greater detail with respect to several embodiments thereof in conjunction with the accompanying drawings, wherein:
- Fig. 1: is a left side view of a straddle-type vehicle,
- Fig. 2: is a sectional view of a portion, in the straddle-type vehicle, in which an engine, a motor and a generator are provided,
- Fig. 3: shows illustrations of a motor rotational shaft and a rear wheel axle being operatively coupled,
- Fig. 4: is an illustration of a generator unit,
- Fig. 5: is an illustration of a motor unit,
- Fig. 6: is a view, showing a generator stator being fixed to a generator cover,
- Fig. 7: is a view, showing a motor stator being fixed to a motor cover,
- Fig. 8: is a view of the generator unit being mounted on a generator rotational shaft,
- Fig. 9: are illustrations of a handle mounted on the generator unit,
- Fig. 10: is a view of the generator cover mounted on the straddle-type vehicle as seen from the side,
- Fig. 11: is a view of a motor unit being mounted on a motor rotational shaft, and
- Fig. 12: is an illustration of a handle mounted on the motor unit.

Presently, the following description reference numerals are used:
1: straddle-type vehicle 10: front wheel 20: rear wheel
30: handlebars 40: front wheel axle 50: rear wheel axle
51: shaft 55: gear 60: motor cover
61,62: motor cover center 63: motor fixing section
70: motor stator 71,111: outside region
74,114: stator body side region 80: motor rotor
85: motor rotational shaft 86: end region
87: position adjustment section 90: motor
91: motor body side region 100: generator cover
101: ignition pickup 102: projection
103: generator fixing section
105,106: generator external over
107,108: handle fixing section 110: generator stator
120: generator rotor 121: timing judgement projection
122: rotor body side region
125: generator rotational shaft 126: end region
130: generator 140: engine 141: piston
150-155: bolt 158: bearing 160: crankshaft
170: bracket 180: generator case 190: motor case
200: generator unit 211: generator carrying unit
300: motor unit 310: motor carrying unit
400,500: assembling handle.

Now, an embodiment will be described with reference to the drawings. In the following description of the drawings, the same or similar parts are designated by the same or similar reference numerals. However, it should be noted that the drawings are schematic.

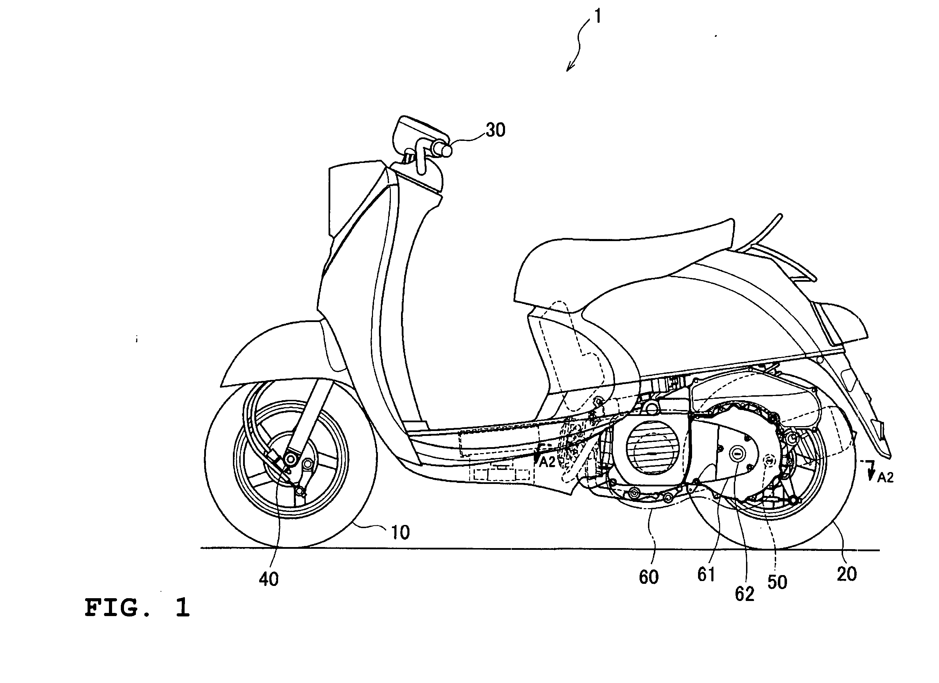

Fig. 1 is a left side view of a straddle-type vehicle 1. The straddle-type vehicle refers to a vehicle with two through four wheels on which human being can ride in a straddle fashion, for example, such as a motorcycle or a buggy. The straddle-type vehicle includes a scooter type vehicle on which human being rides with his or her legs resting on a footrest.

As shown in Fig. 1, the straddle-type vehicle 1 is provided with a front wheel 10; a rear wheel 20; handle bars 30; a front wheel axle 40; a rear wheel axle 50; a motor cover 60; and motor cover centers (61, 62).

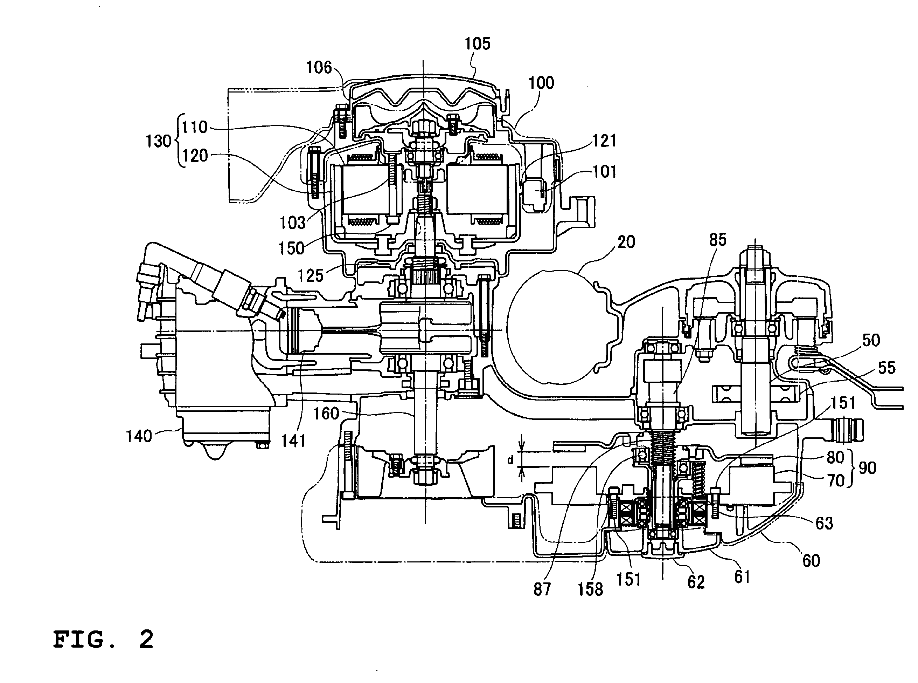

Fig. 2 is a sectional view taken along line A2―A2 of Fig. 1. A crankshaft 160 is rotated through movement of a piston 141 included in an engine 140. The rotation of the crankshaft 160 is transmitted to a rotational shaft of a generator rotor 120 included in a generator 130, or a generator rotational shaft 125. Therefore, the generator rotational shaft 125 rotates through rotation of the crankshaft 160. That is, the generator rotor 120 is rotated by the rotation of the crankshaft 160.

The generator 130 is an electric motor for converting mechanical energy generated by the engine 140 into electrical energy. Here, the mechanical energy in this embodiment refers to torque, and the electrical energy to electric power. The generator rotor 120 is a rotor of the generator 130, and a generator stator 110 a stator of the generator 130. The generator stator 110 generates magnetic force, generating electrical energy in cooperation with the generator rotor 120.

In this embodiment, the generator 130 is controlled by a computer and electrical energy generated by the generator 130 is transmitted to a motor 90 or a battery as required. That is, part of electrical energy generated by the generator 130 is transmitted to the motor 90.

A generator cover 100 is provided with an ignition pickup 101. The ignition pickup 101 monitors a timing judgement projection 121 provided on the generator rotor 120, to determine the ignition timing of the engine.

The motor 90 is an electric motor for converting electrical energy into mechanical energy to drive the rear wheel 20. A motor stator 70 is a stator of the motor 90, and a motor rotor 80 a rotor of the motor 90.

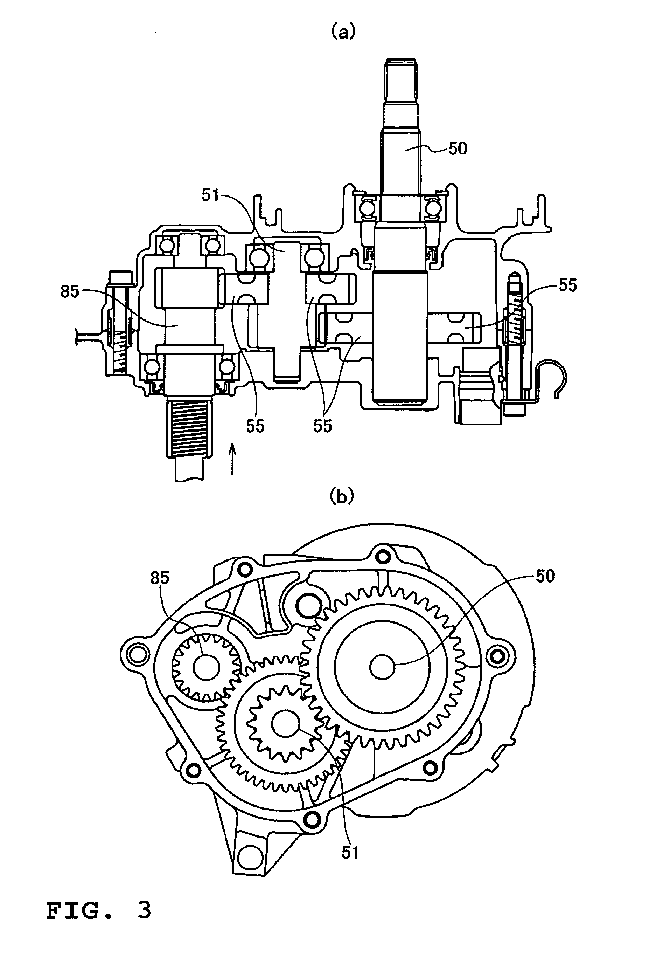

The motor stator 70 generates magnetic force to rotate the motor rotor 80, using electrical energy transmitted to the motor 90. The motor rotor 80 is rotated to thereby rotate a motor rotational shaft 85 on which the motor rotor 80 is mounted. The motor rotational shaft 85 is disposed approximately parallel to the rear wheel axle 50 extending in the lateral direction of the vehicle and is functionally connected to the rear wheel axle 50 through a gear 55 and a shaft 51 (see Fig. 3). Therefore, the rotation of the motor rotational shaft 85 is transmitted to the rear wheel axle 50. As such, the motor 90 converts electric power into torque to drive the rear wheel 20.

A relation between members in which the rotation of one member is transmitted to the other through gears and the like, as in the motor rotational shaft 85 and the rear wheel axle 50 in this embodiment, is referred to as a functional connection. Fig. 3 shows the rear wheel axle 50 and the motor rotational shaft 85 being functionally connected. Fig. 3(b) is a view taken in the direction of an arrow shown in Fig. 3(a).

The position of the motor rotor 80 relative to the motor stator 70, that is, a distance d, is adjusted by a position adjustment section 87. As ca be seen from the figure of Fig. 2, left and right positions of the motor rotor 80 relative to the motor stator 70 are shown as being different from each other, but the reason for the difference is to show the moving range of the motor rotor 80 adjusted by the position adjustment section 87. Practically in Fig. 2, the left and right positions of the motor rotor 80 relative to the motor stator 70 are the same, that is, symmetrical with respect to the rotational axis of the motor rotor 80.

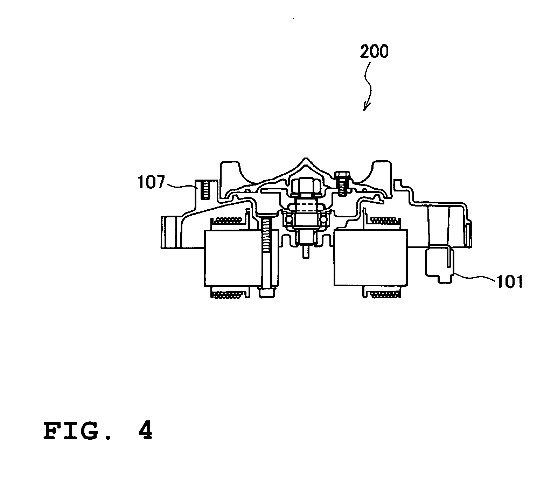

A generator unit 200 shown in Fig. 4 is configured such that the generator stator 110 is fixed to the generator cover 100 at a generator fixing section 103. The generator unit 200 is an electric motor sub-assembly unit for a vehicle formed by the generator stator 110 of the generator 130, and the generator cover 100. Outside the generator cover 100 are mounted generator external covers 105, 106.

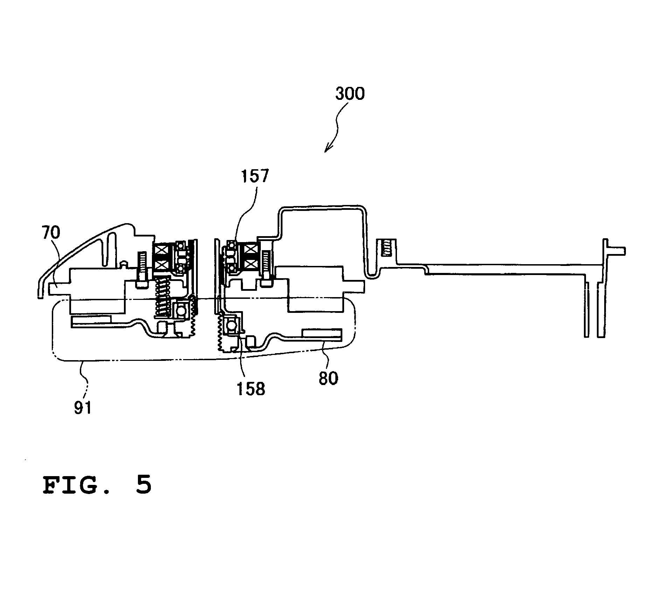

The motor stator 70 is fixed to the motor cover 60 at a motor fixing section 63. Further, a motor unit 300 shown in Fig. 5 is configured such that the motor rotor 80 is fixed to the motor cover 60 through a bearing 158. The motor unit 300 is an electric motor sub-assembly unit for a vehicle structured by the motor stator 70, motor rotor 80 and motor cover 60. Centrally of the motor cover 60 are mounted motor cover centers 61, 62.

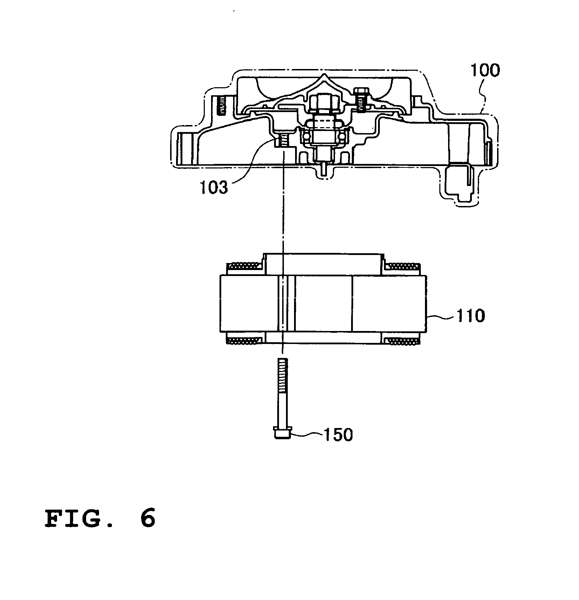

Fig. 6 is a view, showing the generator stator 110 that is fixed to the generator cover 100.

The generator cover 100 is provided with a generator fixing section 103 having a shape such that a bolt 150 for fixing the generator stator 110 can be interlocked therewith. Here, the bolt 150 is a stator fixture for fixing the generator stator 110 to the generator cover 100. That is, the generator fixing section 103 in this embodiment assumes the shape of a female screw for the bolt 150 with the shape of a male screw to be interlocked therewith.

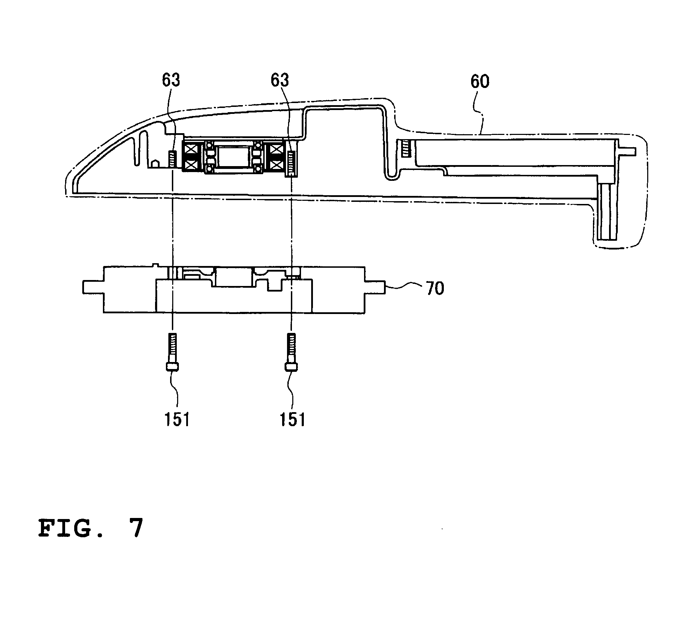

Fig. 7 is a view showing the motor stator 70 that fixed to the motor cover 60.

The motor cover 60 is provided with a motor fixing section 63 having a shape such that a bolt 151 for fixing the motor stator 70 can be interlocked therewith. Here, the bolt 151 is a stator fixture for fixing the motor stator 70 to the motor cover 60. That is, the motor fixing section 63 in this embodiment assumes the shape of a female screw for the bolt 151 with the shape of a male screw to be interlocked therewith.

### (Method of Assembling Straddle-type Vehicle)

Now, described is a method for assembling a straddle-type vehicle when the generator stator 110 of the generator 130 included in the generator unit 200 and the motor 90 included in the motor unit 300 are delivered to a factory where final assembly of the straddle-type vehicle 1 is performed. In this embodiment, the generator unit 200 is delivered, with generator external covers 105, 106 additionally fixed thereto with a bolt 154 and unillustrated bolts. In addition, the motor unit 300 is delivered, with motor cover centers 61, 62 additionally fixed thereto with unillustrated bolts.

For the purpose of preventing the motor stator 70 and motor rotor 80 included in the motor unit 300 from coming into close contact with each other, the motor unit 300 is delivered, with a spacer of plastic material inserted between the motor stator 70 and the motor rotor 80.

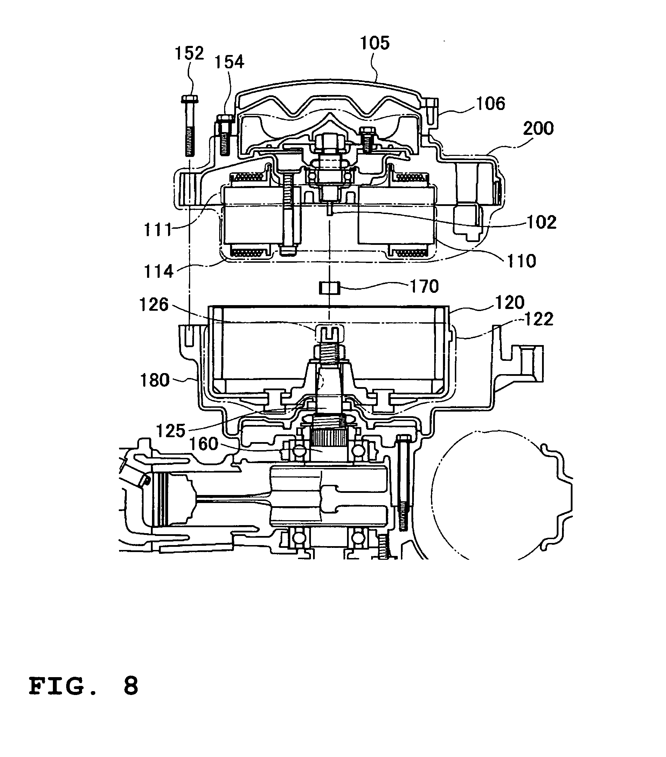

Fig. 8 is a view, showing the generator unit 200 being mounted on a generator rotational shaft 125. As shown in Fig. 8, the generator rotational shaft 125 is fixed to the crankshaft 160 and disposed on the same axis as that of the crankshaft 160.

The generator rotor 120 delivered separately from the generator unit 200 is mounted on the generator rotational shaft 125.

The generator external covers 105, 106 which have been fixed to the generator unit 200, are removed. At this time, the bolt 154 is removed from the generator cover 100 (see Fig. 2 and Fig. 6) included in the generator unit 200.

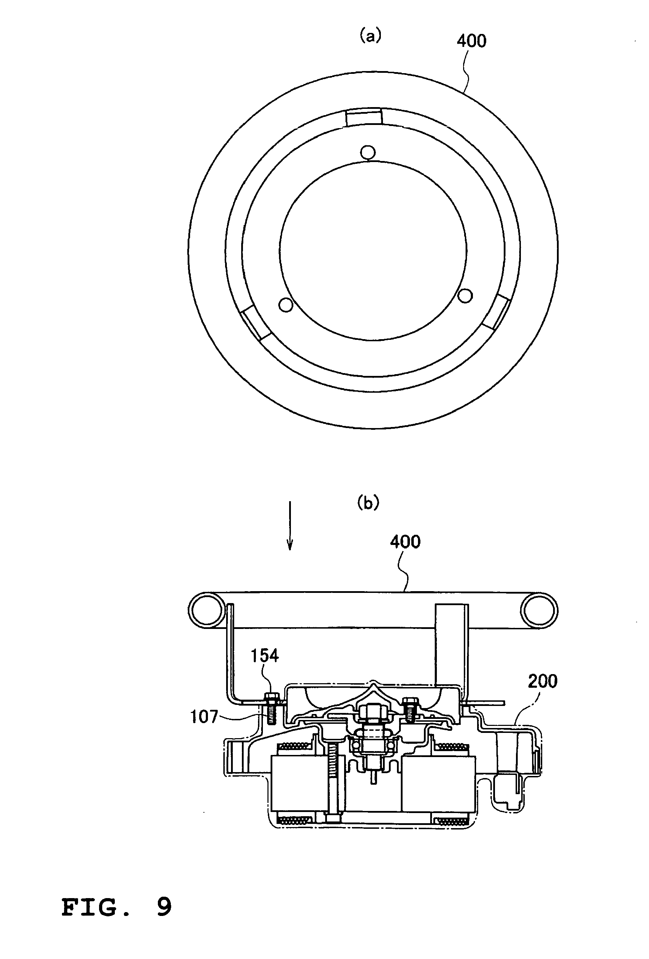

An assembling handle 400 shown in Fig. 9(a) is a support aid tool for aiding a worker in supporting the generator unit 200. The assembling handle 400 is fixed to the generator unit 200 with the bolt 154 and unillustrated bolts, as shown in Fig. 9(b). Fig. 9(a) is a view of the assembling handle 400, as seen in the direction of an arrow shown in Fig. 9(b).

The generator cover 100 (see Fig. 2 and Fig. 6) included in the generator unit 200 is provided with a handle fixing section 107 having a shape such that the bolt 154 and unillustrated bolts for fixing the assembling handle 400 are interlocked therewith. Here, the handle fixing section 107 is a support aid tool fixing section through which the assembling handle 400 for aiding in supporting the generator unit 200 is fixed to the generator cover 100. The bolt 154 and unillustrated bolts are support aid tool fixtures for fixing the assembling handle 400 to the generator unit 200. That is, the handle fixing section 107 of this embodiment assumes the shape of a female screw for the bolt 154 with the shape of a male screw to be interlocked therewith.

Returning to Fig. 8, a ring-shaped bracket 170 is put over the end region 126 of the generator rotational shaft 125 to be fixed temporarily. The reason for the bracket 170 being put over the recessed end region 126 is to prevent deformation of the end region 126 caused by the recessed end region 126 supporting the generator unit 200.

The generator cover 100 (see Fig. 2 and Fig. 6) is provided with a projection 102 centrally of its surface facing the body of the straddle-type vehicle 1. The projection 102 is inserted in the recessed end region 126, so that the positional relation between the generator unit 200 and the generator rotational shaft 125 is established. That is, the generator unit 200 is disposed on the same axis as that of the generator rotational shaft 125.

In addition, as shown in Fig. 8, a generator case 180 covers the rotor body side region 122 of the generator rotor 120 facing the body of the straddle-type vehicle 1. Part of the circumferential side surface of the generator rotor 120 is included in the rotor body side region 122 covered by the generator case 180. That is, part of the circumferential side surface of the generator rotor 120 is exposed from the generator case 180.

Further, as shown in Fig. 2, since the generator rotor 120 has a shape to cover at least part of the circumferential side surface of the generator stator 110, the generator unit 200 including the generator stator 110 is guided by the generator rotor 120 and positioned.

At this time, the generator unit 200 is supported by the holding of the assembling handle 400.

In addition, the generator case 180 is mounted on the crankshaft 160. At this time, the generator case 180 houses at least part of the generator rotational shaft 125.

The generator cover 100 included in the generator unit 200 is fixed to the generator case 180 with a bolt 152, so that the generator unit 200 is fixed to the straddle-type vehicle 1.

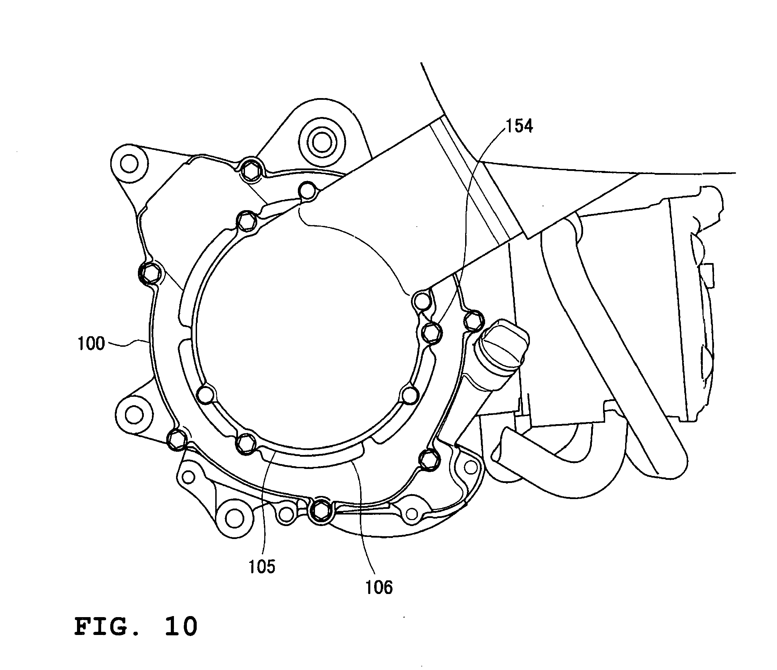

As shown in Fig. 8, the generator cover 100, when it is in the condition of being fixed to the generator stator 110, covers the outside region 111 of the generator stator 110 opposite the stator body side region 114 thereof facing the body of the straddle-type vehicle 1. As shown in Fig. 8 and Fig. 10, in this embodiment, the generator cover 100 covers entirely the outside region 111 of the generator stator 110. Fig. 10 is a right side view, showing a portion of the straddle-type vehicle 1 where the generator 130 is provided.

In addition, as shown in Fig. 8, the generator cover 100, when it is in the condition of being fixed to the generator stator 110, covers the outside region 111 of the generator stator 110. When the generator cover 100 is in the condition of being fixed to the generator stator 110, part of the circumferential side surface of the generator stator 110 is included in the outside region 111, and part of the circumferential side surface of the generator stator 110 is included in the stator body side region 114.

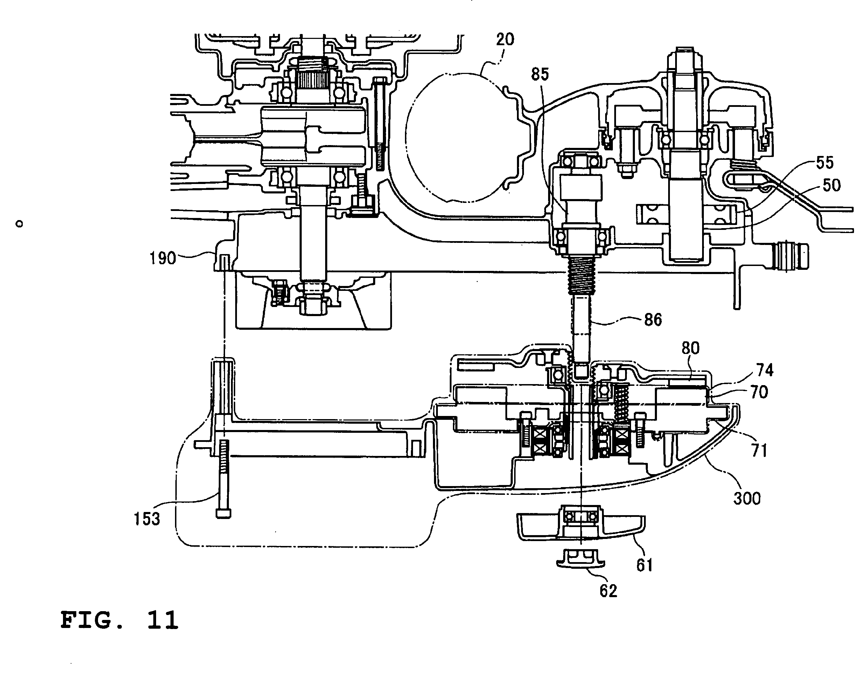

Fig. 11 is a view, showing the motor unit 300 being mounted on the motor rotational shaft 85.

The motor cover centers 61, 62 attached to the motor unit 300 are removed.

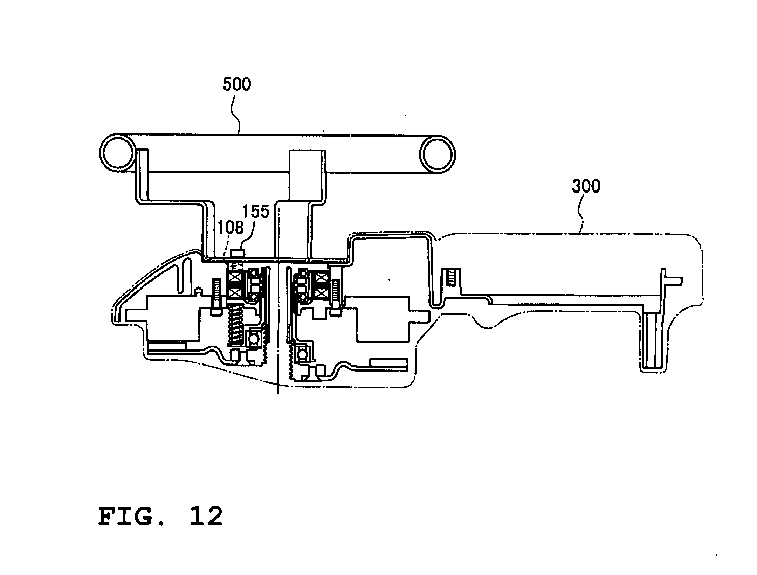

Fig. 12 shows an assembling handle 500. The assembling handle 500 is a support aid tool for aiding in supporting the motor unit 300. The assembling handle 500 is fixed to the motor unit 300 with a bolt 155 and unillustrated bolts.

The motor cover 60 (see Fig. 2 and Fig. 7) is provided with a handle fixing section 108 having a shape such that the bolt 155 and unillustrated bolts for fixing the assembling handle 500 are interlocked therewith. Here, the handle fixing section 108 is a support aid tool fixing section through which the assembling handle 500 for aiding in supporting the motor unit 300 is fixed to the motor cover 60. The bolt 155 and unillustrated bolts are support aid tool fixtures for fixing the assembling handle 500 to the motor unit 300. That is, the handle fixing section 108 of this embodiment assumes the shape of a female screw with which the bolt 155 with the shape of a male screw can be interlocked.

Returning to Fig. 11, the end region 86 of the motor rotational shaft 85 is inserted in a cavity at the central part of the motor stator 70. That is, the motor unit 300 is disposed on the same axis as that of the motor rotational shaft 85. At this time, the motor unit 300 is supported by holding the assembling handle 500.

In addition, the motor case 190 is formed such that it covers part of the motor rotor 80 and is mounted to the motor rotational shaft 85. At this time, a motor case 190 covers the motor body side region 91 (see Fig. 5) facing the body of the motor 90. In addition, the motor case 190 houses at least part of the motor rotational shaft 85

The motor cover 60 included in the motor unit 300 is fixed to the motor case 190 with the bolt 153, so that the motor unit 300 is fixed to the straddle-type vehicle 1.

The rotation of the motor rotational shaft 85 is transmitted to the rear wheel axle 50 through the gear 55 and the shaft 51 shown in Fig. 3.

As shown in Fig. 11, the motor cover 60 (see Fig. 2 and Fig. 7) covers the outside region 71 of the motor stator 70 opposite the stator body side region 74 thereof facing the body of the straddle-type vehicle 1, when the motor stator 70 is in the condition of being fixed to the motor cover 60. As shown in Fig. 1 and Fig. 11, in this embodiment, the motor cover 60 covers entirely the outside region 71 of the motor stator 70.

When the motor cover 60 is in the condition of being fixed to the motor stator 70, part of the circumferential side surface of the motor stator 70 is included in the outside region 71, and part of the motor stator 70 is included in the stator body side region 74.

### (Effect)

According to the straddle-type vehicle 1 of this embodiment, the generator unit 200 is configured such that the generator stator 110 of the generator 130 provided on the straddle-type vehicle 1 is fixed to the generator cover 100. In addition, the generator cover 100 covers the outside region 111 of the generator stator 110. Therefore, a worker engaged in mounting generator stators 110 on the bodies of straddle-type vehicles 1 will be able to support easily the generator stator 110 of a large weight.

Further, a worker engaged in mounting generator stators 110 on the bodies of straddle-type vehicles 1 on which generator rotor 120 are mounted will be able to support easily the generator stator 110 with force capable of responding to the large magnetic force between the generator rotor 120 and the generator stator 110. Therefore, this invention enables the generator 130 to be mounted more easily on the straddle-type vehicle 1.

In addition, the motor unit 300 is configured such that the motor stator 70 and the motor rotor 80 of the motor 90 are fixed to the motor cover 60. In addition, the motor cover 60 covers the outside region 71 of the motor stator 70. Therefore, a worker engaged in mounting motor stators 70 on the bodies of straddle-type vehicles 1 will be able to support easily the motor stator 70 of a large weight by holding the motor cover 60 to which the motor stator 70 is fixed. Therefore, this invention enables the motor 90 to be mounted more easily on the straddle-type vehicle 1.

The generator cover 100 and the motor cover 60 are provided to protect the generator 130 and the motor 90 mounted on the straddle-type vehicle 1 from the outside air, splashed mud, or the like. Therefore, according to this embodiment, no special parts for the assembly are necessary and the generator 130 can be mounted more easily on the straddle-type vehicle 1.

In addition, to the generator cover 100 is fixed the assembling handle 400 for aiding in supporting the generator unit 200. In addition, the assembling handle 400 has a shape allowing human being to hold it easily, as shown in Figs. 9(a), (b).

Therefore, a worker will be able to support more easily the generator stator 110 with force capable of responding to the large force between the generator rotor 120 and the generator stator 110 by holding the assembling handle 400 to support the generator unit 200.

Likewise, to the motor cover 60 is fixed the assembling handle 500 for aiding in supporting the motor unit 300. In addition, the assembling handle 500 has a shape allowing human being to hold it easily, as shown in Fig. 12.

Therefore, the worker will be able to support the motor stator 70 included in the motor unit 300 easily by holding the assembling handle 500, to thereby support the motor unit 300. Therefore, the motor 90 can be mounted more easily on the straddle-type vehicle 1.

In addition, in this embodiment, the motor can be mounted more easily on the motor driven straddle-type vehicle provided with a motor for driving the rear wheel, that is, for generating propulsion force of the straddle-type vehicle 1, or the hybrid straddle-type vehicle in which both of the engine and motor generate power to propel the straddle-type vehicle. In the series hybrid straddle-type vehicle, the engine indirectly generates propulsion force of the straddle-type vehicle.

Further, the generator 130 and the motor 90 can be mounted more easily on the hybrid straddle-type vehicle 1 provided with the generator 130 driven by the engine 140.

Therefore, the straddle-type vehicle 1 provided with the motor 90 and the generator 130 can be assembled more easily.

In addition, when the straddle vehicle 1 is assembled, the generator rotor 120 is mounted on the generator rotational shaft 125. The assembling handle 400 fixed to the generator unit 200 for aiding in supporting the generator unit 200 is held and the generator unit 200 is mounted on the generator rotational shaft 125. Therefore, the generator stator 110 included in the generator unit 200 can be supported with force capable of responding the large magnetic force by which the generator rotor 120 and the generator stator 110 are attracted to each other.

Likewise, when the straddle-type vehicle 1 is assembled, the assembling handle 500 is fixed to the motor unit 300 including the motor rotor 80 and the motor stator 70. The assembling handle 500 is held and the motor unit 300 is mounted on the motor rotational shaft 85. Therefore, the motor stator 70 of a large weight can be supported more easily.

It is possible that the generator 130 and the motor 90 as electrical components are manufactured in a factory geographically separate from a factory where the engine as a mechanical component is manufactured and another factory where final assembly of the straddle-type vehicle is performed. According to this embodiment, the generator unit 200 and the motor unit 300 can be formed in a factory where the generator 130 and the motor 90 are manufactured, before they are delivered to a factory where final assembly of the straddle-type vehicle 1 is performed.

The motor unit 300 is provided with not only the motor stator 70 and the motor cover 60 but also the motor rotor 80. That is, since the motor unit 300 is provided with both of the motor stator 70 and the motor rotor 80 included in the motor and components delivered to the factory where final assembly of the straddle-type vehicle 1 is performed, are assembled in one unit, time and labor in delivering the components as well as in assembly can be saved further.

In addition, the generator case 180 covers the rotor body side region 122. Part of the circumferential side surface of the generator rotor 120 is included in the rotor body side region 122. That is, part of the circumferential side surface of the generator rotor 120 is exposed from the generator case 180. Further, the generator rotor 120 has a shape to cover at least part of the circumferential side surface of the generator stator 110.

Therefore, when the generator unit 200 is mounted on the straddle-type vehicle 1, the generator unit 200 including the generator stator 110 is guided by the generator rotor 120 and positioned.

Further, the rear wheel axle 50 extends in the lateral direction of the vehicle and the motor rotational shaft 85 is disposed approximately parallel to the rear wheel axle 50 and operatively coupled with the rear wheel axle 50. In addition, the motor unit 300 is fixed to the motor case 190 on the same axis as that of the motor rotational shaft 85. At this time, the motor case 190 houses at least part of the motor rotational shaft 85 and covers the motor body side region 91. That is, the region of the motor 90 opposite the motor body side region 91 thereof is exposed from the motor case 190.

Therefore, the motor unit 300 is inserted in and fixed to the motor case 190 opening outwardly of the straddle-type vehicle 1, so that the motor 90 can be mounted on the straddle-type vehicle 1. Further, split left and right crankcases are often provided in the straddle-type vehicle with a single-cylinder engine. In this case, one of the split left and right crankcases is formed with the motor case 190 opening sideways, so that no significant change of a crankcase provided in an ordinary straddle-type vehicle is necessary.

Likewise, the crankshaft 160 extends in the lateral direction of the vehicle. In addition, the generator rotational shaft 125 is fixed to the crankshaft 160 and is disposed on the same axis as that of the crankshaft 160. In addition, the generator unit 200 is fixed to the generator case 180 on the same axis as that of the generator rotational shaft 125. At this time, the generator case 180 houses at least part of the generator rotational shaft 125 and covers the rotor body side region 122 of the generator rotor 120. That is, the region of the generator rotor 120 opposite the rotor body side region 122 thereof is exposed from the generator case 180.

Therefore, the generator unit 200 is inserted in and fixed to the generator case 180 opening outwardly of the straddle-type vehicle 1, so that the generator 130 can be mounted on the straddle-type vehicle 1. Further, split left and right crankcases are often provided in the straddle-type vehicle with a single-cylinder engine. In this case, one of the split left and right crankcases is formed with the generator case 180 opening sideways, so that no significant change of a crankcase provided in an ordinary straddle-type vehicle is necessary.

### (Other Embodiment)

Although the teaching of this invention has been described in the foregoing embodiment, it should not be understood that the teaching is limited to the description and drawings constituting part of this disclosure. Those skilled in the art will recognize from the disclosure that there exist various alternative embodiments, examples and operation techniques of this invention.

In the foregoing embodiment, the straddle-type vehicle 1 is exemplified by a series hybrid straddle-type vehicle, but this invention can be applied to straddle-type vehicles provided with motors for generating power to propel the straddle-type vehicle, or generators for generating electrical energy to rotate the motor. Therefore, the teaching of this invention can also be applied to motors provided on motor driven straddle-type vehicles, or motors and generators provided on parallel hybrid straddle-type vehicles, for example.

In addition, in the foregoing embodiment, stator fixtures are the bolts 150, 151 each having the shape of a male screw. The generator fixing-section 103 and motor fixing-section 63 provided in the generator cover 110 and motor cover 60 each have the shape of a female screw. The generator fixing-section 103 and motor fixing-section 63 are stator-fixing sections. That is, the stator fixing section has a shape allowing its interlocking with the stator fixing-member.

However, the generator fixing-section 103 and motor fixing-section 63 are suitable if they have shapes allowing the electric motor cover to be fixed to the stator, and when the stator is provided with an interlocking claw, for example, the stator fixing-section may be provided with an interlocking hole of a shape allowing its engagement with the interlocking claw. In addition, when the stator is provided with an interlocking hole, the stator fixing-section may be provided with an interlocking claw.

On the other hand, in the foregoing embodiment, support aid tool fixtures are the bolts 154, 155 each having the shape of a male screw. The handle fixing sections 107, 108 provided in the generator cover 100 and motor cover 60 each have the shape of a female screw. The handle fixing sections 107, 108 are support aid tool fixing-sections. That is, the support aid tool fixing-section has a shape allowing its interlocking with the support aid tool fixture.

However, the support aid tool fixing-sections are suitable if they have shapes allowing the support aid tools to be fixed to the generator cover 100 and motor cover 60, and when the support aid tool is provided with an interlocking claw, for example, the support aid tool fixing-section may be provided with an interlocking hole of a shape allowing its engagement with the interlocking claw. In addition, when the support aid tool is provided with an interlocking hole, the support aid tool fixing-section may be provided with an interlocking claw.

In addition, in the foregoing embodiment, the generator cover 100 has a shape to cover part of the circumferential side surface of the generator stator 110 when the stator 110 is in the condition of being fixed to the generator cover. Therefore, with the generator stator 110 fixed to the generator cover 100, part of the circumferential side surface of the generator stator 110 is exposed.

However, the generator cover 100 may have a shape to cover entirely the circumferential side surface of the generator stator 110 as a whole. In this case, when the generator unit 200 is delivered, the generator stator 110 is protected by the generator cover 100.

Further, in the foregoing embodiment, although the generator unit 200 includes the generator cover 100 and generator stator 110, the generator unit 200 may further include the generator rotor 120. On the other hand, in the foregoing embodiment, although the motor unit 300 includes the motor cover 60, motor stator 70 and motor rotor 80, the motor rotor 80 is not necessarily required.

The description above discloses (amongst others) a first embodiment which is directed to an electric motor sub-assembly unit for a vehicle (generator unit 200, motor unit 300), comprising: a stator (generator stator 110, motor stator 70) of an electric motor (generator 130, motor 90) adapted to perform energy conversion between electrical energy and mechanical energy for propelling the straddle-type vehicle; and an electric motor cover (generator cover 100, motor cover 60) which covers the stator and to which the stator is fixed, wherein the electric motor cover covers the outside region (outside regions 111, 71) of the stator opposite the stator body side region (stator body side regions 114, 74) thereof facing the body of the straddle-type vehicle (straddle vehicle 1).

According to such an embodiment, the electric motor sub-assembly unit for a vehicle is configured such that an electric motor cover is fixed to the stator of an electric motor provided on a straddle-type vehicle. The electric motor cover covers the outside region of the stator. Therefore, a worker engaged in mounting stators on straddle-type vehicles is able to support a stator by holding an electric motor cover having a stator fixed thereto. Therefore, the stator can be supported easily, enabling the electric motor to be mounted on the straddle-type vehicle more easily. The electric motor cover is provided for the purpose of protecting the electric motor mounted on the straddle-type vehicle from the outside air, splashed mud or the like.

The electric motor cover according to the first embodiment may assume the shape to cover the circumferential side surface of the stator when the stator is in the condition of being fixed to the electric motor cover.

The electric motor cover may be provided with a support aid tool fixing-section (handle fixing sections 107, 108) through which a support aid tool (assembly handles 400, 300) is fixed to the electric motor cover, the support aid tool aiding in supporting the electric motor sub-assembly unit for a vehicle when the electric motor sub-assembly unit for a vehicle is mounted on the body of the straddle-type vehicle.

The electric motor according to the first embodiment may be a motor (motor 90) for converting electrical energy into mechanical energy to drive the rear wheel.

The electric motor sub-assembly unit for a vehicle according to the first embodiment may further comprises a rotor (motor rotor 80) of the electric motor to be fixed to the electric motor cover.

The electric motor may be a generator (generator 130) for converting mechanical energy generated by an engine (engine 140) into electrical energy, and the rotor (generator rotor 120) of the generator may be rotated by the rotation of a crankshaft (crankshaft 160) of the engine extending in the lateral direction of the vehicle.

A second embodiment is directed to a straddle-type vehicle, comprising; the electric motor sub-assembly unit for a vehicle (motor unit 300) according to the first feature; a rear wheel axle (rear wheel axle 50) extending in the lateral direction of the vehicle; a motor rotational shaft (motor rotational shaft 85) disposed approximately parallel to the rear wheel axle and operatively coupled with the rear wheel axle; and a motor case (motor case 190) for housing at least part of the motor rotational shaft, to cover the motor body side region (motor body side region 91) of the motor facing the body of the straddle-type vehicle, wherein the electric motor sub-assembly unit for a vehicle is fixed to the motor case on the same axis as that of the motor rotational shaft.

The third embodiment is directed to a straddle-type vehicle, comprising: the electric motor sub-assembly unit for a vehicle (generator unit 200) according to the first feature; and a generator case (generator case 180) for covering a region of the rotor facing the body of the straddle-type vehicle, the region being a rotor body side region (rotor body side region 122) including part of the circumferential side surface of the rotor, wherein the rotor has a shape to cover at least part of the circumferential side surface of the stator.

The straddle-type vehicle according to the third embodiment may further comprise a generator rotational shaft (generator rotational shaft 125) fixed to the crankshaft and disposed approximately on the same axis as that of the crankshaft and may be characterized in that the generator case houses at least part of the generator rotational shaft, and the electric motor sub-assembly unit for a vehicle is fixed to the generator case on the same axis as that of the generator rotational shaft.

A fourth embodiment is directed to a straddle-type vehicle, wherein there are provided the electric motor sub-assembly units for a vehicle (generator unit 200, motor unit 300) according to the first embodiment.

A fifth embodiment is directed to a straddle-type vehicle assembling method for a straddle-type vehicle having a generator for converting electrical energy into mechanical energy to propel the straddle-type vehicle, comprising the steps of: mounting a rotor of the generator on the body of the straddle-type vehicle; forming an electric motor sub-assembly unit for a vehicle assembled in such a manner as to be mounted on the straddle vehicle, with the stator fixed to a generator cover for covering the outside region of a stator of the generator opposite the stator body side region thereof facing the body of the straddle-type vehicle; fixing to the generator cover, a support aid tool for aiding in supporting the electric motor sub-assembly unit; and holding the support aid tool, to fix the electric motor sub-assembly unit for a vehicle to the body of the straddle-type vehicle to which a rotor of the generator is fixed.

A sixth embodiment is directed to a straddle-type vehicle assembling method for a straddle-type vehicle having a motor for converting electrical energy into mechanical energy to propel the straddle-type vehicle, comprising the steps of: forming an electric motor sub-assembly unit for a vehicle assembled in such a manner as to be mounted on the straddle vehicle, with the stator and a rotor of the motor fixed to a motor cover for covering the outside region of a stator of the motor opposite the stator body side region thereof facing the body of the straddle-type vehicle; fixing to the motor cover, a support aid tool for aiding in supporting the electric motor sub-assembly unit; and holding the support aid tool, to fix the electric motor sub-assembly unit for a vehicle to the body of the straddle-type vehicle.

Thus, according to these embodiments, an electric motor sub-assembly unit for a vehicle, a straddle-type vehicle with an electric motor sub-assembly unit and a method of assembling the straddle-type vehicle can be provided capable of effecting easy support of a stator included in the electric motor so that the electric motor can be mounted on the straddle-type vehicle more easily.

Therein, in order to provide an electric motor sub-assembly unit for a vehicle, a straddle-type vehicle provided with an electric motor sub-assembly unit for a vehicle and a method of assembling the straddle-type vehicle, capable of effecting easy support of a stator included in the electric motor so that the electric motor can be mounted more easily on the straddle-type vehicle, the description discloses a generator unit 200 comprising a generator stator 110 of a generator 130 for converting mechanical energy into electrical energy to propel a straddle-type vehicle 1, and a generator cover 100 which covers the stator 110 and to which the generator stator 110 is fixed, wherein the generator cover 100 covers the outside region 111 of the generator stator 110 opposite the stator body side region 114 thereof facing the body of the straddle-type vehicle 1. In addition, a motor unit 300 including a motor stator 70 of a motor 90 is also configured in the same way as in the generator unit 200.

In short, the description discloses amongst others an electric motor sub-assembly unit for a vehicle, comprising: a stator of an electric motor adapted to perform energy conversion between electrical energy and mechanical energy for propelling the straddle-type vehicle; and an electric motor cover which covers the stator and to which the stator is fixed, wherein the electric motor cover covers the outside region of the stator opposite the stator body side region thereof facing the body of the straddle-type vehicle (first aspect).

According to an embodiment thereof, the electric motor cover covers the circumferential side surface of the stator when the stator is in the condition of being fixed to the electric motor cover (second aspect).

According to a further embodiment thereof, the electric motor cover is provided with a support aid tool fixing-section through which a support aid tool is fixed to the electric motor cover, the support aid tool aiding in supporting the electric motor sub-assembly unit for a vehicle when the electric motor sub-assembly unit for a vehicle is mounted on the body of the straddle-type vehicle (third aspect).

According to another embodiment thereof, the electric motor is a motor for converting electrical energy into mechanical energy to drive the rear wheel (fourth aspect).

According to still another embodiment thereof, the electric motor sub-assembly unit for a vehicle further comprises a rotor of the electric motor to be fixed to the electric motor cover (fifth aspect).

According to yet another embodiment thereof, the electric motor is a generator for converting mechanical energy generated by an engine into electrical energy, and the rotor of the generator is rotated by the rotation of a crankshaft of the engine extending in the lateral direction of the vehicle (sixth aspect).

Further, the description discloses a straddle-type vehicle comprising: the electric motor sub-assembly unit for a vehicle as set forth in the fourth aspect; a rear wheel axle extending in the lateral direction of the vehicle; a motor rotational shaft disposed approximately parallel to the rear wheel axle and operatively coupled with the rear wheel axle; and a motor case for housing at least part of the motor rotational shaft, to cover the motor body side region of the motor facing the body of the straddle-type vehicle; wherein the electric motor sub-assembly unit for a vehicle is fixed to the motor case on the same axis as that of the motor rotational shaft.

Still further, the description disclose a straddle-type vehicle comprising: the electric motor sub-assembly unit for a vehicle as set forth in the fifth aspect; and a generator case for covering a region of the rotor facing the body of the straddle-type vehicle, the region being a rotor body side region including part of the circumferential side surface of the rotor, wherein the rotor has a shape to cover at least part of the circumferential side surface of the stator.

Likewise, the straddle-type vehicle might further comprise a generator rotational shaft fixed to the crankshaft and disposed approximately on the same axis as that of the crankshaft, wherein the generator case houses at least part of the generator rotational shaft, and the electric motor sub-assembly unit for a vehicle is fixed to the generator case on the same axis as that of the generator rotational shaft.

Moreover, a straddle-type vehicle might be provided with the electric motor sub-assembly unit for a vehicle as set forth in the fourth aspect and the electric motor sub-assembly unit for a vehicle as set forth in the sixth aspect.

Still further, there is disclosed a straddle-type vehicle assembling method for a straddle-type vehicle having a generator for converting electrical energy into mechanical energy to propel the straddle-type vehicle, comprising the steps of: mounting a rotor of the generator on the body of the straddle-type vehicle; forming an electric motor sub-assembly unit for a vehicle that is assembled in such a manner as to be mounted on the straddle vehicle, with the stator fixed to a generator cover for covering the outside region of a stator of the generator opposite the stator body side region thereof facing the body of the straddle-type vehicle; fixing to the generator cover, a support aid tool for aiding in supporting the electric motor sub-assembly unit; and holding the support aid tool, to fix the electric motor sub-assembly unit for a vehicle to the body of the straddle-type vehicle to which a rotor of the generator is fixed.

Yet further, there is disclosed a straddle-type vehicle assembling method for a straddle-type vehicle having a motor for converting electrical energy into mechanical energy to propel the straddle-type vehicle, comprising the steps of: forming an electric motor sub-assembly unit for a vehicle assembled in such a manner as to be mounted on the straddle vehicle, with the stator and a rotor of the motor fixed to a motor cover for covering the outside region of a stator of the motor opposite the stator body side region thereof facing the body of the straddle-type vehicle; fixing to the motor cover, a support aid tool for aiding in supporting the electric motor sub-assembly unit; and holding the support aid tool, to fix the electric motor sub-assembly unit for a vehicle to the body of the straddle-type vehicle.

## Claims

1. Sub-assembly of a unit adapted to perform energy conversion between electrical energy and mechanical energy for propelling a straddle-type vehicle, comprising a stator and a unit cover, which covers the stator and to which the stator is fixed, wherein the unit cover is configured to cover an outside region of the stator opposite a stator body-side facing a body of the straddle-type vehicle.

2. Sub-assembly according to claim 1, wherein the unit cover covers a circumferential side surface of the stator when the stator is in the condition of being fixed to the unit cover.

3. Sub-assembly according to claim 1 or 2, wherein the unit cover is provided with a support aid tool fixing-section by means of which a support aid tool is fixable to the unit cover, the support aid tool aiding in supporting the sub-assembly when the sub-assembly unit is mounted on the body of the straddle-type vehicle.

4. Sub-assembly according to one of the claims 1 to 3, wherein the unit is an electric motor for converting electrical energy into mechanical energy to drive a rear wheel of the vehicle.

5. Sub-assembly according to claim 4, further comprising a rotor of the electric motor to be fixed to the electric motor cover.

6. Sub-assembly according to one of the claims 1 to 3, wherein the unit is a generator for converting mechanical energy generated by an engine into electrical energy, and a rotor of the generator is rotated by a rotation of a crankshaft of the engine extending in a lateral direction of the vehicle.

7. Straddle-type vehicle comprising an electric motor having a sub-assembly unit according to claim 4 or 5, a rear wheel axle extending in the lateral direction of the vehicle, a motor rotational shaft disposed approximately parallel to the rear wheel axle and operatively coupled with the rear wheel axle, and a motor case for housing at least part of the motor rotational shaft, to cover a motor body side region of the motor facing the body of the straddle-type vehicle, wherein the electric motor sub-assembly according to claim 4 or 5 for a vehicle is fixed to the motor case on the same axis as that of the motor rotational shaft.

8. Straddle-type vehicle comprising an electric motor having a sub-assembly unit according to claim 6, and a generator case for covering a region of the rotor facing the body of the straddle-type vehicle, the region being a rotor body side region including part of a circumferential side surface of the rotor, wherein the rotor has a shape to cover at least part of the circumferential side surface of the stator.

9. Straddle-type vehicle according to claim 8, further comprising a generator rotational shaft fixed to the crankshaft and disposed approximately on the same axis as that of the crankshaft, wherein the generator case houses at least part of the generator rotational shaft, and the sub-assembly unit according to claim 6 is fixed to the generator case on the same axis as that of the generator rotational shaft.

10. Straddle-type vehicle comprising an electric motor sub-assembly unit according to claim 4 or 5, and an electric motor sub-assembly unit according to claim 6.

11. Straddle-type vehicle assembling method for a straddle-type vehicle having a generator for converting electrical energy into mechanical energy to propel the straddle-type vehicle, comprising the steps of:
mounting a rotor of the generator on a body of the straddle-type vehicle,
forming a generator sub-assembly unit that is assembled in such a manner as to be mounted on the straddle-type vehicle, with the stator fixed to a generator cover configured to cover an outside region of a stator of the generator opposite the stator body-side region thereof facing the body of the straddle-type vehicle,
fixing to the generator cover, a support aid tool for aiding in supporting the generator sub-assembly unit, and
holding the support aid tool, to fix the generator sub-assembly unit to the body of the straddle-type vehicle to which a rotor of the generator is fixed.

12. Straddle-type vehicle assembling method for a straddle-type vehicle having an electric motor for converting electrical energy into mechanical energy to propel the straddle-type vehicle, comprising the steps of:
forming an electric motor sub-assembly unit for a vehicle assembled in such a manner as to be mounted on the straddle vehicle, with the stator and a rotor of the motor fixed to a motor cover for covering an outside region of a stator of the motor opposite a stator body-side region thereof facing the body of the straddle-type vehicle,
fixing to the motor cover, a support aid tool for aiding in supporting the electric motor sub-assembly unit, and
holding the support aid tool, to fix the electric motor sub-assembly unit for a vehicle to the body of the straddle-type vehicle.
